(19)

Europäisches
Patentamt
European
Patent Office
Office européen
des brevets

(11) **EP 3 550 434 A1**

(12) **EUROPEAN PATENT APPLICATION**

(43) Date of publication:
**09.10.2019 Bulletin 2019/41**

(51) Int Cl.:
*G06F 9/50* (2006.01)

(21) Application number: **18165907.9**

(22) Date of filing: **05.04.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
• **Lugones, Diego
Dublin (IE)**
• **Aroca, Jordi Arjona
Dublin (IE)**

(74) Representative: **Bryers LLP
7 Gay Street
Bath, Bath and North East Somerset BA1 2PH
(GB)**

(54) **APPLICATION CAPACITY**

(57)      In example, a method for generating a measure of a capacity of a chain of components forming an application portion executing over virtualized physical hardware comprises generating a tuple for respective ones of the components, each tuple comprising data representing a number of deployed virtual machine instances for the component, a performance metric, and a traffic profile, comparing the performance metric for each component, based on the number of deployed virtual machine instances for the component, against a set of predetermined criteria, and determining, on the basis of the comparison, whether a traffic profile is selected as a data point characterising a boundary condition of the capacity of the chain of components for the traffic profile.

(a)          (b)

FIG. 1

## Description

TECHNICAL FIELD

Aspects relate, in general to generating a measure of a capacity of a chain of components.

BACKGROUND

An application portion executing in a cloud environment can comprise multiple components that may be independently scaled in order to accommodate changes in demand or workload. Such portions can serve multiple types of traffic, and a composition of multiple traffic types forming a traffic mix or profile may be served at any given moment in time such that the traffic profile encountered by the portion can quickly vary. Different traffic profiles will consume different resources at varying rates.

SUMMARY

According to an example, there is provided a method for generating a measure of a capacity of a chain of components forming an application portion executing over virtualized physical hardware, the method comprising generating a tuple for respective ones of the components, each tuple comprising data representing a number of deployed virtual machine instances for the component, a performance metric, and a traffic profile, comparing the performance metric for each component, based on the number of deployed virtual machine instances for the component, against a set of predetermined criteria, and determining, on the basis of the comparison, whether a traffic profile is selected as a data point characterising a boundary condition of the capacity of the chain of components for the traffic profile. A traffic profile can comprise a composition of one or more traffic types served by the chain of components at a given instance. A traffic profile can be selected in the event that it is Pareto optimal. In an example, the method can further comprise determining whether the traffic profile is dominated by at least one other data point characterising the boundary condition of the capacity of the chain of components. The boundary condition can represent a Pareto front characterising one of an upper and lower bound of the capacity of a component utilizing the deployed virtual machine instances for the performance metric. A lower bound can be generated using maximisation criteria when the performance metric is met for the traffic profile, and wherein an upper bound is generated using minimisation criteria when the performance metric is not met for the traffic profile. The method can further comprise detecting a change in the physical hardware or performance upgrades by identifying an intersection between an upper and a lower bound of the capacity of a component. A change in the virtualized physical hardware can be accommodated by shifting the upper and lower bounds proportionally to a measure of the degree of intersection therebetween.

According to an example, there is provided a control apparatus for provisioning resources for components forming an application portion, the control apparatus comprising a configuration engine to receive data representing a current configuration of the application portion, a performance metric, and a traffic profile, and generate an application portion configuration, a controller to receive the application portion configuration from the configuration engine, and a forecaster to receive the traffic profile, generate a traffic forecast and transmit data representing the traffic forecast to the controller. The configuration engine can generate a tuple for respective ones of the components, each tuple comprising data representing a number of deployed virtual machine instances for the component, the performance metric, and the traffic profile, compare the performance metric for each component, based on the number of deployed virtual machine instances for the component, against a set of predetermined criteria, and determine, on the basis of the comparison, whether a traffic profile is selected as a data point characterising a boundary condition of the capacity of the chain of components for the traffic profile. The controller can provide the application portion configuration to a management entity, whereby to enable scaling of the resources for the application portion.

According to an example, there is provided a non-transitory machine-readable storage medium encoded with instructions executable by a processor for generating a measure of a capacity of a chain of components forming an application portion executing over virtualized physical hardware, the machine-readable storage medium comprising instructions to receive data representing a current configuration of the application portion, a performance metric, and a traffic profile, compare the performance metric for each component, based on the number of deployed virtual machine instances for the component, against a set of predetermined criteria, and determine, on the basis of the comparison, whether a traffic profile is selected as a data point characterising a boundary condition of the capacity of the chain of components for the traffic profile. Further instructions can be provided to generate an application portion configuration. Further instructions can be provided to provide the application portion configuration to a management entity, whereby to enable scaling of the resources for the application portion. Further instructions can be provided to detect a change in the physical hardware or performance upgrades by identifying an intersection between an upper and a lower bound of the capacity of a component.

BRIEF DESCRIPTION OF THE DRAWINGS

Embodiments will now be described, by way of example only, with reference to the accompanying drawings, in which:

Figures 1a and 1b are schematic representations of Pareto fronts resulting from using maximisation (1a) and minimisation (1b) criteria according to an example;

Figure 2 is a schematic representation of a component configuration for traffic profiles composed of T1 and T2 according to an example;

Figure 3 is a schematic representation of a configuration engine in a cloud-based system according to an example;

Figures 4a to 4c are schematic representations of dominating and dominated traffic profiles according to an example;

Figures 5a to 5c are schematic representations of the identification of the fronts a traffic profile can be associated to according to an example;

Figures 6a to 6c are schematic representations of traffic profile domination according to an example;

Figures 7a to 7c are schematic representations of an intersection and corresponding adjustment according to an example;

Figures 8a and 8b are schematic representations of extrapolation according to an example;

Figures 9a and 9b are schematic representations of inferred provisioning and a forecasted mix according to an example;

Figure 10 is a schematic representation of exploratory provisioning according to an example;

Figure 11 is a flowchart of a method according to an example; and

Figure 12 is a schematic representation of a processor associated with a memory according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In a cloud or virtualised system, an application portion can be provided that can be used to execute a service, for example. The application portion can be composed of a chain of components, each of which can be independently scaled by, for example, instantiating (or terminating) virtual machines, containers or execution environments depending on workload. That is, the resources for an application portion can be scaled to meet demand.

Such provisioning of resources for an application portion is challenging as the capacity needs of each component in the chain of components that goes to make up the application portion can vary with the profile of the traffic being served. Resources can be provisioned in excess, so they are enough to serve any expected traffic profile. This ensures performance but is expensive in terms of resources. Alternatively, controllers can adapt provisioned resources of each component to the traffic mix flowing through the application. However, failing to provision resources in time for a component impacts the performance of the entire application, which is usually subject to service level objectives (SLOs).

Controllers can monitor the application, reactively provisioning resources when performance is not within a pre-specified operational range. This provisioning is iterative until performance reaches a desired range. This process can be slow and lead to SLO violations. Other controllers can adapt resources to the observed variations in the traffic mix proactively (i.e. in advance), ensuring that resources are always available before they are needed. To do so, these controllers combine forecasting with application configurations that capture the dependencies between traffic, performance and resources. Having an accurate configuration allows a cloud application controller to provision resources proactively without jeopardizing SLOs. Creating accurate configurations is challenging as they need to capture the dependencies between application components dynamically in presence of varying traffic mixes. Moreover, configurations should adapt to application changes as well as to hardware (HW) or software (SW) updates to provide sufficient accuracy. Furthermore, cloud applications are becoming more atomized each day having more components to configure, the number of traffic types processed (e.g. video formats) increases, increasing the data to store and process to create the configurations. Similarly, SLOs are getting more stringent, and deployment times shorter. All of these aspects make the creation of adaptive application configurations difficult and - therefore - make automating resource management in clouds a challenging problem.

According to an example, there is provided a method for provisioning resources for an application portion by observing performance metrics and selecting the most relevant information to describe the application portion and its interactions with a stack. In an example, a Pareto formulation is used to decide, in each monitoring period, whether monitored data is relevant. New data samples are kept if the observed traffic mix for a component and amount of resources (e.g., number of instances, vCPUs, GBs of RAM, etc...) is Pareto optimum, that is, it is not dominated by previously observed traffic mixes. That is, data samples related to dominant traffic mixes are considered to be the most effective or useful to configure the application, as they describe the maximum observed capacity that can be served with the available resources. In an example, a traffic mix, or traffic profile, T can be defined as $T = \{T_1, ...T_j, ..., T_N\}$ where the $T_j$ with j: [1, N] are different traffic types. A traffic type can be, for example, audio traffic, video traffic, VOIP traffic and so on. Accordingly, a traffic profile comprises a set of different traffic types, all of which may be served by an application portion.

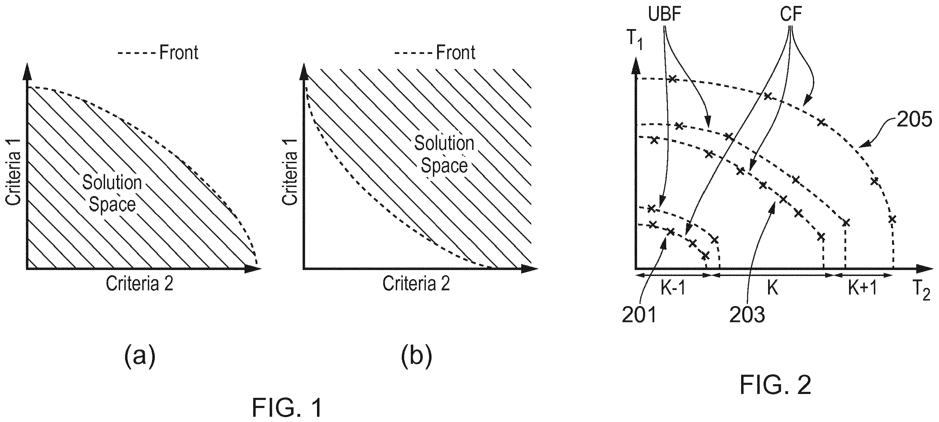

In an example, a traffic profile can be classified as a Pareto optimum traffic profile according to two different criteria: maximization or minimization. Figures 1a and 1b are a schematic representation of Pareto fronts resulting from using maximisation (1a) and minimisation (1b) criteria according to an example.

For example, upon receipt of a new data sample from the application portion, if performance goals are met, the optimality of the traffic profile can be evaluated using the maximization criteria. The set of resulting Pareto optima conform a Pareto Front. In an example, the Pareto front resulting from using maximization criteria defines a lower bound of the capacity of a component with a certain amount of resources and for a performance goal. When a traffic mix does not meet the performance goals, it can be evaluated using minimization criteria. The resulting Pareto front then defines an upper bound on the capacity of the component for those resources. That is those resources are not enough to serve that particular traffic mix. As more optima are added to the fronts, the gap between both fronts narrows and the configuration becomes more precise. In an example, the lower and upper bounds on the capacity for an amount of resources can be denoted as a Capacity Front (CF) and an Upper Bound capacity Front (UBF). A configuration of a component can consist of several pairs of fronts, and the application configuration is the union of component configurations.

Figure 2 is a schematic representation of a component configuration for traffic profiles composed of T1 and T2 according to an example. In the example of figure 2, a first pair of fronts 201 delimits the capacity that can be processed with K-1 resources. A second pair of fronts 203 delimits the capacity with K resources, and a third pair of fronts 205 (only CF depicted) delimits the capacity with K+1 resources, and so on. Accordingly, as the number of resources decreases, the capacity that can be processed with a given set of resources also decreases.

The use of Pareto optima enables the elimination of noisy data, thereby reducing the data used to create configurations. In an example, fronts can be created even with few Pareto optima and extrapolated generating conservative configurations. Initial configurations can be generated and extrapolated after observing the first traffic profile. Each Pareto optimum contributes individually to the Pareto Fronts and, therefore, is part of the configuration. This has two benefits: accuracy is always non-decreasing, as it improves with every new Pareto optimum, and it is straightforward to detect HW/SW changes, as this would cause an intersection between CF and UBF fronts. Once detected, the intersection can be quantified and used to update a configuration accordingly, updating the stored Pareto optima and thus not discarding any previous knowledge.

According to an example, a configuration engine that can be used to generate component configurations can be integrated within a cloud application controller or as an independent module.

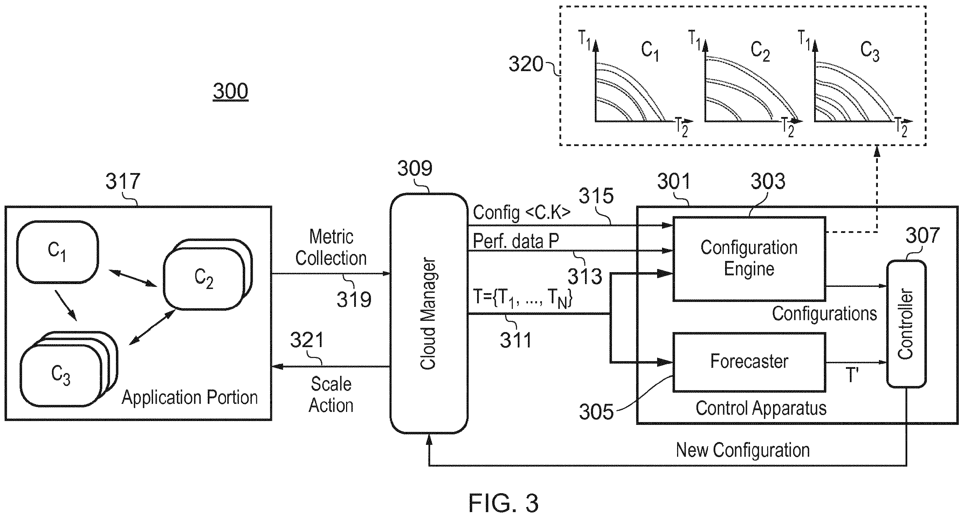

Figure 3 is a schematic representation of a configuration engine in a cloud-based system according to an example. Control apparatus 301 includes a configuration engine 303, a forecaster 305 and a controller 307. The configuration engine 303 receives data from a management entity 309 of the system 300. The data includes input traffic profiles 311, performance metrics 313 and application portion 317 configurations 315. The application portion 317 in the example of figure 3 comprises three components, C1, C2 and C3, each of which may be scaled by, for example, instantiating (or terminating) virtual machines, and which are linked in some manner to enable the passing of information therebetween.

The management entity 309 receives metric data 319 from the application portion 317. In an example, this data 319 provides information relating to a present component configuration for the application portions, including the number of resources for each component for example. The configuration engine 303 receives a configuration 315 of components making up the application portion 317, a performance metric 313 and a traffic profile 311 from the management entity 309. Using these inputs, the configuration engine can generate a set of configurations 320 for the application portion 317 that can be enforced, via the controller 307, by the management entity 309 by way of a scale action 321, which can be in the form of an instruction for the scaling of one or more of the components of the application portion 317.

In an example, the inputs to the configuration engine 303 can be collected directly from available standard APIs (e.g. REST APIs) in the management entity 309 or from application managers. The set of configurations 320 can be used, jointly with traffic forecasts, by the controller 307 to produce new system configurations. In an example, the configuration engine 303 can update configurations for the application portion 317 with each new received batch of monitoring data.

Given an application portion 317 with M components (C1, C2 and C3 in figure 3), each of them using one or more virtual instances and receiving a traffic profile $T = \{T_1, T_2, ..., T_M\}$ as input, a process for generating a configuration according to an example can be as follows:

　　1. Collect a batch of monitored data;
　　2. For each component evaluate whether current traffic profile is to be stored as a new Pareto optimum in either the CF or UBF associated to the current resources;

　　　　2.1. If performance metrics are met, test domination with optima in the CF. Otherwise, test domination with optima in the UBF.
　　　　2.2. If the current traffic profile is not dominated by any stored Pareto optimum, it is added to the corresponding front. If any Pareto optimum traffic mix in the front is dominated by the current one, it is discarded. If the current traffic profile is dominated by any stored Pareto optimum traffic mixes, it is discarded.

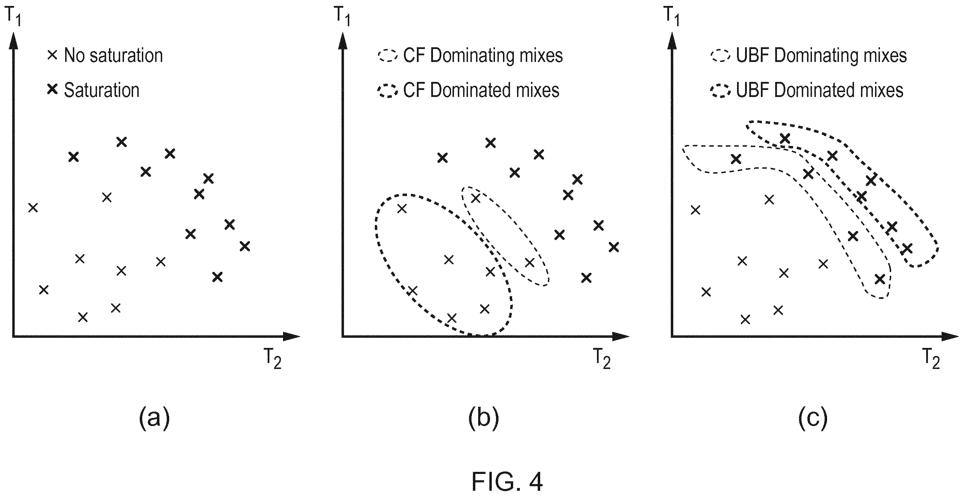

Figures 4a to 4c are schematic representations of dominating and dominated traffic profiles according to an example. Referring to figure 4a, a set of traffic mixes forming a traffic profile consisting of traffic types T1 and T2 is observed in an application portion and the crosses indicate whether or not they meet the performance metrics of a component (saturation). Accordingly, in the example of figure 4, an application portion with multiple components can meet a performance metric with a given number of resources for the components for the traffic profiles depicted (no saturation). Where there is saturation, this indicates that an application portion with multiple components cannot meet a performance metric with a given number of resources for the components for the traffic profiles depicted.

Referring to figure 4b, a set of dominating (Pareto optima) and dominated combinations for a capacity front are depicted, whilst in figure 4c a set of dominated and dominating combinations for an upper bound front are depicted. In an example, the configuration engine stores dominating profiles only.

Referring again to figure 3, an application portion 317 has M components (C1, C2 and C3 in the case of figure 3), each of which can be provisioned with an amount or number of resources that can change with the number of virtual instances for the component. Hence, using the available inputs, a configuration that relates the number of instances of a component to a traffic profile that it can process while meeting a performance metric can be generated.

In an example, the following inputs can be used:

-　Application portion configuration: $C = \{(C_1, I_1),...,(C_i, I_i),..., (C_M, K_M)\}$ with i: [1, M], where $C_i$ is a component id and $K_i$ is the number of deployed instances of $C_i$.
-　Traffic profiles: $T = \{T_1, ...,T_j,...,T_N\}$ where $T_j$ with j: [1, N] are the requests for each of the N traffic types.
-　A performance metric, p, for the application portion. Examples of performance metrics can be latency or message rate for example.

A performance goal, |P|, can be set for each component, denoted as $P_{il}$ where i indicates the component and 1 the goal. In an example, from these goals, the first |P-1| are secondary and $P_{i|P|}$ is a primary goal. Primary goals can be considered to be critical, implying that more resources are needed. For instance, a latency SLO of 2 seconds. If, for a traffic profile, a primary goal (SLO) is violated, controller 307 would need to provision more resources. Secondary goals are used for reference. For instance, with a goal 50% of the previous SLO it is possible to keep track of how much traffic a component with a number of instances can process keeping latency below 1 second, for example. When a secondary goal is surpassed there is no need to provisioning additional resources.

According to an example, configuration engine 303 receives monitoring data at regular or irregular periods of time. Without loss of generality, assuming regular monitoring periods, at each monitoring period the following actions can be performed:

　　a) Collect T, C and p. Create tuples $<C_i, K_i, p,\{T_1, ..., T_j, ..., T_N\}>$ for each component.
　　b) Compare p to each $P_{il}$ for the current $K_i$ for $C_i$. Perform domination tests between the current traffic profile and sets of Pareto optimals belonging to the fronts selected.

　　　　b.1) For the first $P_{i1}>p$ (metric is met), the configuration engine performs a domination test of T and the Pareto optimal T* associated to each $CF_{i,k,1}$, if any. $CF_{i,k,1}$ is the Capacity front for component i with k instances and performance goal I.

b.2) For the first $P_{i1}<p$ (goal is not met), the configuration engine performs a domination test of T and the Pareto optima T* associated to UB-$F_{i,k,1}$, if any.

For the CF case, traffic profile T={$T_1$,..$T_j$,..., $T_N$}, is a Pareto optimum if it is not dominated by another traffic profile T*. In an example, T* dominates T (T < T*, "<" is the domination operator) if the following two conditions hold:

$T^*_i >= T_j$ for all $j \in$ [1, N],
$T^*i > T_j$ for at least one $j \in$ [1, N],

for the UBF:

$T^*_j <= T_j$ for all $j \in$ [1, N],
$T^*_j < T_j$ for at least one $j \in$ [1, N],

c) Test domination between traffic profile T and Pareto optima $T^s$ from the selected fronts. The result of these tests can be:

d.1) T < $T^s_x$ for all $x \in$ [1, $|T^s|$], the new traffic profile T is dominated and, therefore, discarded.
d.2) $T^s_x$ < T for any $x \in$ [1, $|T^s|$], T dominates other previous Pareto optima. Those $T^s_x$ < T are discarded and T is associated as a new Pareto Optimal to the front.
d.3) If neither (d.1) nor (d.2) are met, T is neither dominated nor dominates other $T^s$. T is stored.

In an example, at each monitoring period, one of the two fronts (CF, UBF) is updated from up to two different $K_i$ when T is a new Pareto optimal. This can be performed in parallel for each component of the application portion 317. In an example, the application portion configuration is the union of the capacity configurations of each component that consist of the Pareto fronts for each performance goal and number of instances.

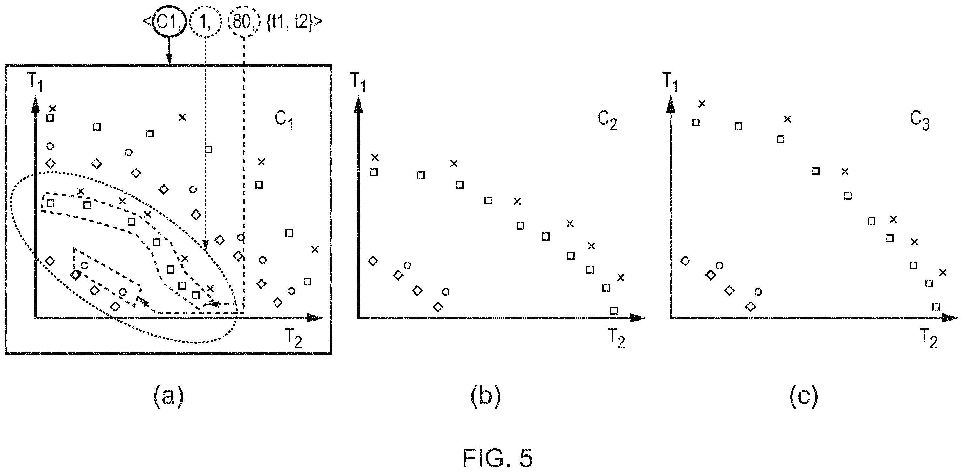

Figures 5a-c are schematic representations of the identification of the fronts a traffic profile can be associated to according to an example. With reference to figure 5a for example, CI identifies the component, and Ki=1 is the number of instances. In this example, assume that P1 =50 and P2= 100. As p=80>P1, the traffic profile will be compared with those in UBF1,1,1. At the same time, as p<P2 it will be compared to the mixes in CF1,1,2. Pareto optimals associated to primary goals are shown for CF and UBF. Pareto optimals for secondary goals are shown for CF and UBF.

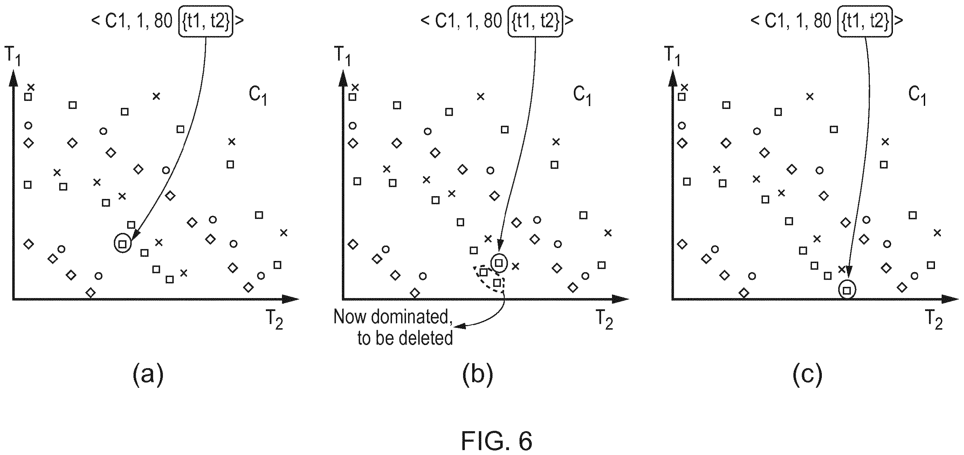

Figures 6a-c are schematic representations of traffic profile domination according to an example. In figure 6a, an example of a dominated profile (circled) is shown. In figure 6b, a profile (circled) that dominates other previous profiles (dotted circle) is shown, whilst in figure 6c a profile (circled) that neither dominates nor is dominated is depicted.

As the number of Pareto optima for the fronts increases, the configuration for a component becomes more compact and the gap between fronts narrows, as shown in Figure 2 for example.

According to an example, assuming that traffic is of a discrete magnitude (e.g. there is no such thing as a fraction of a call or request), the traffic profiles define a finite N-dimensional space with $T_i{}^{max}$ possible traffic values per traffic type. Those dimensions can be sorted such that $T_j{}^{max} \leq T_{j+1}{}^{max}$ for all j<N. Then, there are up to $\prod_{j=1}^{N} T_j^{\max}$ different traffic profiles.

To obtain an application configuration, the configuration engine uses a maximum of $\sum_{i=1}^{M} (2 \cdot K_i^{\max} \cdot |P| \cdot \prod_{j=1}^{N-1} T_j^{\max})$ stored profiles, where $K_i{}^{max}$ is the maximum number of instances for component i. In general, $\sum_{i=1}^{m} (2 \cdot K_i^{\max} \cdot |P|) \ll T_N^{\max}$. Furthermore, for every new profile, the accuracy increases if the new profile is dominant in any pair of fronts.

In an example, data samples of traffic profiles that have been already observed can be discarded or ignored. For example, all the possible traffic mixes in the N-dimensional space for each component can be stored, i.e., at least:

$$ T_N^{max}/(2 \cdot |P|) >> 1 $$

more samples than the Pareto-based modeller (~ one order of magnitude). Finally, samples may be stored with repetition, allowing data for a traffic mix to be stored multiple times. Then, the configuration engine can reduce the data stored by more than one order of magnitude. The amount of data stored can also have implications on the time required to compute updates, on the feasibility of adapting the model to HW/SW changes as well as on memory and storage footprints. In the case of time-window based techniques, their accuracy could only match Pareto-based modelling for windows of size equal or larger to $K^{\max} \prod_{j=1}^{N-1} T_j^{\max}$, and only if during such time window all the traffic mixes in the Pareto CFs associated to the $P_{|P|}$ performance goal where observed, which is highly improbable.

Changes in the system 300 can impact the performance of application components. In an example, the configuration engine can detect such changes at a component level. For example, upon system improvements, the capacity of component instances increases, decreasing in the opposite case. Changes in capacity cause intersections between CF-UBF pairs which are detected by the configuration engine. For example, assume that a change reduces the capacity of the instances a component. Intersection occurs when current T is Pareto optimum for its corresponding UBF but falls within the region delimited by its associated CF. This can be detected if T is Pareto optimal for the UBF and it is not for its associated CF.

According to an example, the configuration engine can update the component configuration by shifting the Pareto fronts in the CFs and UBFs proportionally to such a measured intersection. To do so, the configuration engine can move inwards (outwards) each of the stored tuples along a line between their current projection and the origin.

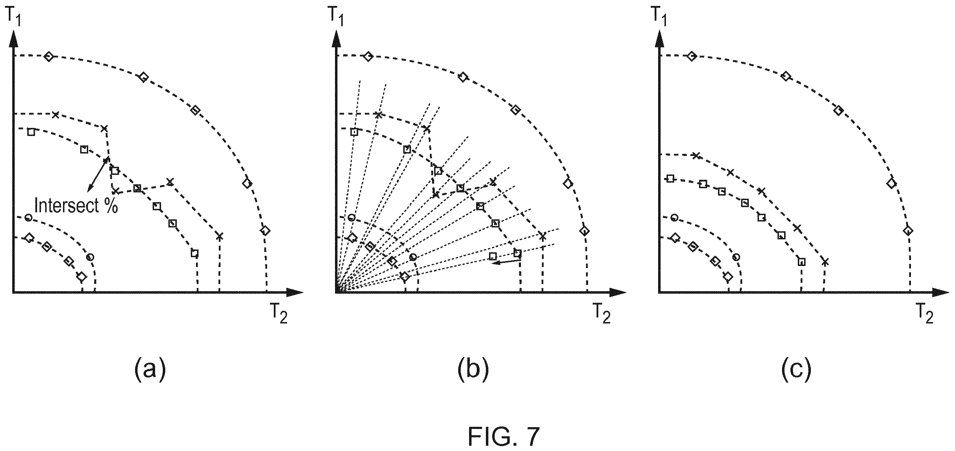

Figures 7a-c are schematic representations of an intersection and corresponding adjustment according to an example. In the example of figure 7, the capacity of an instance is reduced. For clarity, we show this process for one of the fronts although it is applied in parallel to all the fronts in the component. Note also that an increment in the capacity can be detected in the same way, but the intersection will be observed in the fronts associated to a secondary performance goal. An increase in the capacity implies that it may now be possible to meet a performance goal with a traffic mix T with K-1 instances of a component, even when it was possible with K instances.

Accordingly, an intersection as shown in figure 7a implies a capacity decrease. The degree of intersection is measured, and along each line between the origin and a measurement point, as shown in figure 7b, each data point is shifted by the same degree as the measured intersection amount. This results in the movement of the fronts as shown in figure 7c.

According to an example, the configuration engine can estimate the amount of resources for an as yet unobserved traffic profile. This can be caused by:

a) Rapid increase on one or more traffic types that lead to a (forecasted) traffic profile which is far from the most outward front. In this case, the information contained in the configuration falls short; or
b) One or more application components were overprovisioned when the controller started to monitor the application, having no (or poor) information about the fronts for lower number of instances required for low traffic mixes.

In both cases the root of the problem is a lack of observations, either for high or low traffic profiles. In an example, an extrapolation of the knowledge already generated by the configuration engine can be used, in the first case outwards, inwards in the second.

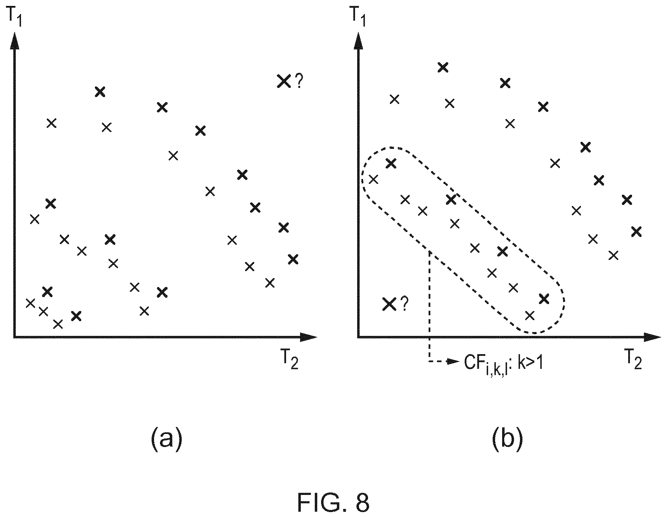

Figure 8 is a schematic representation of an extrapolation according to an example. In figure 8a there is a profile beyond the most outward pair of fronts, whilst in figure 8b there is a profile within the most inward pair of fronts, being such pair for k>1.

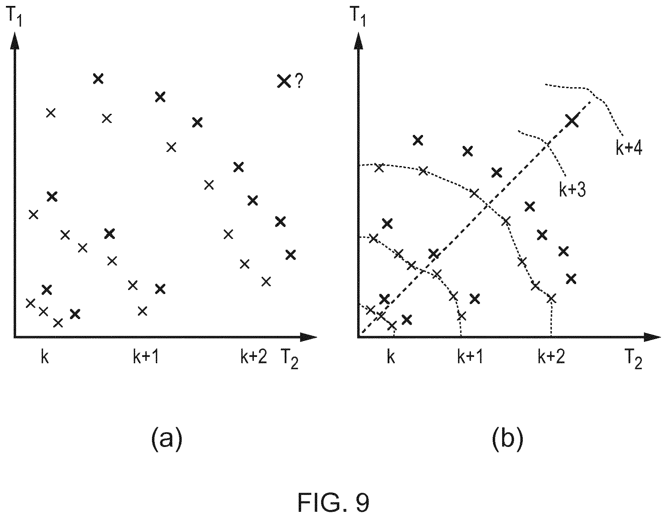

In the 'outwards' case, and referring to figure 9, which is a schematic representation of inferred provisioning (outwards extrapolation, only main performance goals fronts are shown) according to an example, a forecasted mix (shown by question mark in figure 9a) falls beyond the most outwards front. As shown in figure 9b, the system can connect that combination to the origin, computing the points at which this line crosses the different fronts. It then uses this information to make an extrapolation of the fronts and compute the minimum number of instances required to meet the main performance goal P|P|.

That is, according to an example:

a) Compute the line R between the origin and the observed (forecasted) traffic profile.
b) Compute the N-dimensional polytope joining the N-dimensional Pareto optimals in the fronts.
c) Compute the intersection between R and the front for each number of instances. This intersection represents a point at each of those fronts where the traffic profile was the same we have for the new observed (forecasted) traffic profile but at a lower scale.
d) Perform linear regressions (or other modelling techniques, e.g. polynomial regressions) using the estimated traffic profiles at each front as the independent variable and the number of instances as the dependent one. With this regression, we can estimate what the traffic profiles would be that can be managed by an increasing number of instances. The regression is extrapolated until a number of instances k such that an extrapolated $T^x \in CF_{i,k|P|}$ dominates the forecasted T'.
e) K is returned as the tentative number of instances.

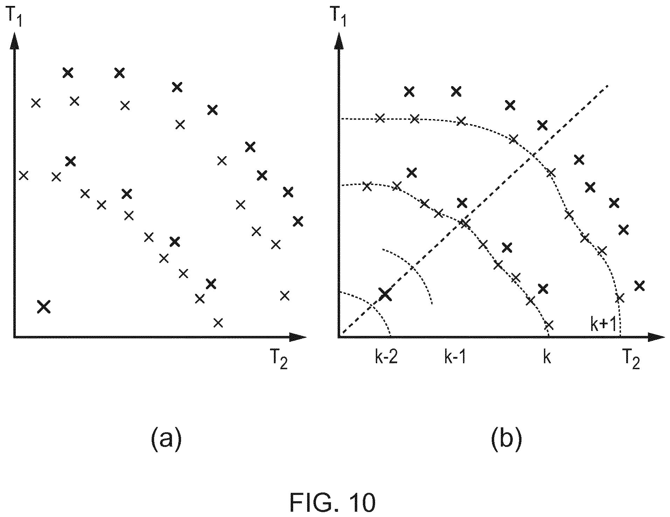

Figure 10 is a schematic representation of exploratory provisioning (inwards extrapolation, only main performance goal fronts are shown). The controller may lack information for some configurations. For profiles within the most inward front, the controller performs an extrapolation similar to the inference case but inwards, finding the minimum k required to meet the main performance goal P|P|.

That is, according to an example:
The configuration engine can apply the same principle as described above:

a) Compute the line R that passes through the origin and T', and extends it until the most outward front.
b) Extrapolates inwards the number of instances starting at the most inward front. The extrapolation finishes when a k such that at least a $T^x \in CF_{i,k,|P|}$ is dominated by T' is found, or k=1.

b.1. If k=1 and $CF_{i,l,|P|}$. dominates T', the extrapolation returns l instance.
b.2. Otherwise, it returns k+1.

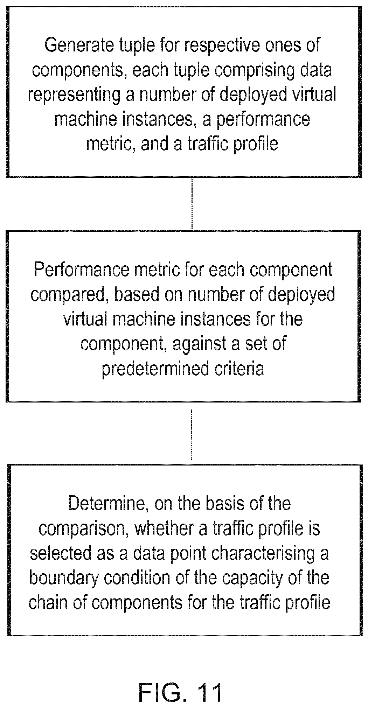

Figure 11 is a flow chart of a method according to an example. More particularly, figure 11 is a flowchart of a method for generating a measure of a capacity of a chain of components forming an application portion executing over virtualized physical hardware. In block 1111a tuple is generated for respective ones of the components, each tuple comprising data representing a number of deployed virtual machine instances for the component, a performance metric, and a traffic profile. In block 1112, the performance metric for each component is compared, based on the number of deployed virtual machine instances for the component, against a set of predetermined criteria. In block 1113 it is determined, on the basis of the comparison, whether a traffic profile is selected as a data point characterising a boundary condition of the capacity of the chain of components for the traffic profile.

Examples in the present disclosure can be provided as methods, systems or machine-readable instructions. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine-readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

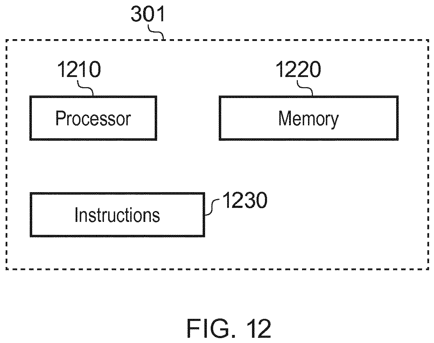

Figure 12 shows an example of a processor 1210 associated with a memory 1220. The memory 1220 comprises computer readable instructions 1230 which are executable by the processor 1210. In an example, the processor, memory and instructions can be part of the control apparatus 301. The instructions 1230 comprise instruction to, at least receive data representing a current configuration of the application portion, a performance metric, and a traffic profile, compare the performance metric for each component, based on the number of deployed virtual machine instances for the component, against a set of predetermined criteria, and determine, on the basis of the comparison, whether a traffic profile is selected as a data point characterising a boundary condition of the capacity of the chain of components for the traffic profile.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the spirit of the present disclosure. In particular, a feature or block from one example may be combined with or substituted by a feature/block of another example.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

List of abbreviations:

CF: Capacity Front
REST: Representational State Transfer
SLO: service level objective
UBF: Upper Bound capacity Front
vCPU: virtual CPU

## Claims

1. A method for generating a measure of a capacity of a chain of components forming an application portion executing over virtualized physical hardware, the method comprising:

    generating a tuple for respective ones of the components, each tuple comprising data representing a number of deployed virtual machine instances for the component, a performance metric, and a traffic profile;
    comparing the performance metric for each component, based on the number of deployed virtual machine instances for the component, against a set of predetermined criteria; and
    determining, on the basis of the comparison, whether a traffic profile is selected as a data point characterising a boundary condition of the capacity of the chain of components for the traffic profile.

2. A method as claimed in claim 1, wherein a traffic profile comprises a composition of one or more traffic types served by the chain of components at a given instance.

3. A method as claimed in claim 1 or 2, wherein a traffic profile is selected in the event that it is Pareto optimal.

4. A method as claimed in claim 3, further comprising: determining whether the traffic profile is dominated by at least one other data point characterising the boundary condition of the capacity of the chain of components.

5. A method as claimed in claim 3 or 4, wherein the boundary condition represents a Pareto front characterising one of an upper and lower bound of the capacity of a component utilizing the deployed virtual machine instances for the performance metric.

6. A method as claimed in claim 5, wherein a lower bound is generated using maximisation criteria when the performance metric is met for the traffic profile, and wherein an upper bound is generated using minimisation criteria when the performance metric is not met for the traffic profile.

7. A method as claimed in claim 5 or 6, further comprising:

    detecting a change in the physical hardware or performance upgrades by identifying an intersection between an upper and a lower bound of the capacity of a component.

8. A method as claimed in claim 7, further comprising: accommodating the change in the virtualized physical hardware by shifting the upper and lower bounds proportionally to a measure of the degree of intersection therebetween.

9. A control apparatus for provisioning resources for components forming an application portion, the control apparatus comprising:
a configuration engine to:

    receive data representing a current configuration of the application portion, a performance metric, and a traffic profile; and
    generate an application portion configuration;
    a controller to receive the application portion configuration from the configuration engine; and
    a forecaster to receive the traffic profile, generate a traffic forecast and transmit data representing the traffic forecast to the controller.

10. A control apparatus as claimed in claim 9, the configuration engine further to:

    generate a tuple for respective ones of the components, each tuple comprising data representing a number of deployed virtual machine instances for the component, the performance metric, and the traffic profile;
    compare the performance metric for each component, based on the number of deployed virtual machine instances for the component, against a set of predetermined criteria; and
    determine, on the basis of the comparison, whether a traffic profile is selected as a data point characterising a boundary condition of the capacity of the chain of components for the traffic profile.

11. A control apparatus as claimed in claim 9 or 10, the controller further to:

    provide the application portion configuration to a management entity, whereby to enable scaling of the resources for the application portion.

12. A non-transitory machine-readable storage medium encoded with instructions executable by a processor for generating a measure of a capacity of a chain of components forming an application portion executing over virtualized physical hardware, the machine-readable storage medium comprising instructions to:

receive data representing a current configuration of the application portion, a performance metric, and a traffic profile

compare the performance metric for each component, based on the number of deployed virtual machine instances for the component, against a set of predetermined criteria; and

determine, on the basis of the comparison, whether a traffic profile is selected as a data point characterising a boundary condition of the capacity of the chain of components for the traffic profile.

13. A non-transitory machine-readable storage medium as claimed in claim 12, further encoded with instructions to generate an application portion configuration.

14. A non-transitory machine-readable storage medium as claimed in claim 13, further encoded with instructions to provide the application portion configuration to a management entity, whereby to enable scaling of the resources for the application portion.

15. A non-transitory machine-readable storage medium as claimed in any of claims 12 to 14, further encoded with instructions to detect a change in the physical hardware or performance upgrades by identifying an intersection between an upper and a lower bound of the capacity of a component.

(a)

(b)

FIG. 1

FIG. 2

300

320

Config <C.K> 315

Perf. data P

T={T₁, ..., Tₙ} 313

311

301

303

Configuration Engine

Forecaster

Configurations

Control Apparatus

T'

Controller 307

New Configuration

305

C₁ T₁ T₂   C₂ T₁ T₂   C₃ T₁ T₂

309 Cloud Manager

Metric Collection 319

Scale Action 321

317 Application Portion

C₁   C₂   C₃

FIG. 3

FIG. 4

<C1, 1, 80, {t1, t2}>

$C_1$

$T_1$

$T_2$

(a)

$C_2$

$T_1$

$T_2$

(b)

$C_3$

$T_1$

$T_2$

(c)

FIG. 5

EP 3 550 434 A1

FIG. 6

(a)                                           (b)                                           (c)

FIG. 7

(a)

(b)

FIG. 8

(a)

(b)

FIG. 9

(a)  (b)

FIG. 10

Generate tuple for respective ones of components, each tuple comprising data representing a number of deployed virtual machine instances, a performance metric, and a traffic profile

Performance metric for each component compared, based on number of deployed virtual machine instances for the component, against a set of predetermined criteria

Determine, on the basis of the comparison, whether a traffic profile is selected as a data point characterising a boundary condition of the capacity of the chain of components for the traffic profile

FIG. 11

301

1210

Processor

1220

Memory

Instructions 1230

FIG. 12

Europäisches Patentamt

European Patent Office

Office européen des brevets

# EUROPEAN SEARCH REPORT

Application Number

EP 18 16 5907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PIETRI ILIA ET AL: "Multi-objective optimization of scheduling dataflows on heterogeneous cloud resources", 2017 IEEE INTERNATIONAL CONFERENCE ON BIG DATA (BIG DATA), IEEE, 11 December 2017 (2017-12-11), pages 361-368, XP033298259, DOI: 10.1109/BIGDATA.2017.8257946 [retrieved on 2018-01-12] * abstract * * First two paragraphs of section III. Problem Description; page 362 * * First two paragraphs of section VI. Algorithm Description; page 362 - page 363 * * page 363, left-hand column, line 10 - line 29 * * Section B. Computation of Heterogeneous...; page 364 * | 1-15 | INV. G06F9/50 |

-----

TECHNICAL FIELDS SEARCHED (IPC)

G06F

The present search report has been drawn up for all claims

| Place of search | Date of completion of the search | Examiner |
|---|---|---|
| Munich | 26 June 2018 | Ross, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)